# EUROPÄISCHE PATENTANMELDUNG

(11) **EP 3 171 496 A1**
(43) Veröffentlichungstag der Anmeldung: **24.05.2017**
(21) Anmeldenummer: 16191901.4
(22) Anmeldetag: 30.09.2016
(51) Int. Cl.: H02K 16/00, H02K 7/08, H02K 15/16

(54) **MOTORBAUGRUPPE**

(30) Priorität: 18.11.2015 DE 102015222792
(71) Anmelder: Baumüller Nürnberg GmbH, 90482 Nürnberg (DE)
(72) Erfinder: GÖTZ, Fritz Rainer, 73230 Kirchheim u. Teck (DE)
(74) Vertreter: FDST Patentanwälte

(57) **Zusammenfassung**

Die Erfindung betrifft eine Motorbaugruppe (2) mit einer Anzahl von entlang einer gemeinsamen Drehachse (D) angereihten Elektromotoren (6) mit jeweils einem Stator (24) und einem Rotor (22) sowie einer diesen tragenden Motorwelle (20), die stirnseitig mit der Motorwelle (20) des angereihten Elektromotors (6) gekoppelt ist, wobei die Motorwellen (20) benachbarter Elektromotoren (6) mittels eines wellenfesten Verbindungsstücks (26) gekoppelt sind, das mit den Wellenenden (20a, 20b) der jeweiligen Motorwelle (20) formschlüssig oder kraftschlüssig gefügt ist, und wobei die Elektromotoren (6) jeweils ein Motorgehäuse (10) sowie A-seitig ein Lagerschild (12) und B-seitig ein lagerfreies Flanschschild (14) aufweisen.

## Beschreibung

Die Erfindung betrifft eine Motorbaugruppe mit einer Anzahl von Elektromotoren mit jeweils einem Stator und einem Rotor sowie einer den Rotor tragenden Motorwelle. Die Erfindung betrifft weiterhin einen mit einer derartigen Motorbaugruppe ausgestatteten Verstellantrieb.

Unter einem Elektromotor wird hierbei vorzugsweise ein bürstenloser Elektromotor (Gleichstrommotor) verstanden. Bürstenlose Elektromotoren weisen üblicherweise einen wellenfesten Rotor auf, der mittels eines gehäusefesten Stators in eine Rotationsbewegung versetzt wird. Hierzu umfasst der Stator eine Anzahl von Spulen die mittels einer Elektronik bestromt werden. Die einzelnen Spulen sind entweder in einer sogenannten Dreiecksschaltung oder aber in einer Sternschaltung miteinander als eine Drehfeldwicklung elektrisch verbunden. Durch die Drehfeldwicklung wird im Betrieb ein rotierendes Magnetfeld erzeugt, welches den Rotor antreibt.

Ein derartiger Elektromotor wird üblicherweise an einer Gehäusestirnseite, insbesondere B-seitig, mit einem Gehäuse- oder Abschlussdeckel verschlossen. Der Abschlussdeckel dient zum Verschließen einer stirnseitigen Gehäuseöffnung, die beispielsweise bei einem als Servomotor ausgeführten Elektromotor für die Montage einer Gebervorrichtung (Geber) benötigt wird. Bei dem Geber handelt es sich in der Regel um einen Drehzahl- oder Winkellagegeber, z. B. einen Resolver, als elektromagnetischer Messumformer zur Wandlung einer Winkellage des motorseitigen Rotors in eine elektrische Größe für die Elektronik.

Der Abschlussdeckel ist oftmals mit einem B-seitigen Lagerschild (B-Lagerschild) ausgeführt, welches mit einem an der gegenüberliegenden Gehäusestirnseite angeordneten A-seitigen Lagerschild (A-Lagerschild) die den Rotor tragende Motorwelle (Rotorwelle) rotationsbeweglich lagert. Hierzu weisen die Lagerschilder beispielsweise Wälzlager auf, in denen die Motorwelle im Bereich der jeweiligen Wellenenden eingefasst ist. Das A-Lagerschild ist hierbei üblicherweise als ein Festlager ausgestaltet, wobei die B-seitige Lagerung einen Schiebesitz aufweist, sodass Wärmeausdehnungen der Motorwelle im Betrieb ausgeglichen werden.

Die Baugröße eines Elektromotors ist über die Achshöhe definiert. Während unter Baulänge insbesondere die axiale Länge des (Motor-)Gehäuses zu verstehen ist, wird mit der Achshöhe insbesondere der Abstand zwischen einem Mittelpunkt der Motorwelle und einer parallel zur Motorwelle angeordneten Gehäusefläche beschrieben. Mit anderen Worten bezeichnet die Achshöhe die radiale Abmessung des Elektromotors hinsichtlich der durch die Motorwelle definierten Rotationsachse.

Hierbei tritt grundsätzlich das Problem auf, dass bei Anwendungen mit höheren Leistungsanforderungen insbesondere Elektromotoren benötigt werden, die eine vergleichsweise große Achshöhe aufweisen, um die geforderte Motorleistung aufzubringen. Dadurch wird ein vorhandener Bauraum aufgrund der großen Baugröße des Elektromotors nachteiligerweise reduziert beziehungsweise eingeschränkt.

Aus der US 4,233,532 ist zwar eine aus mehrere bürstenbehafteten Motormodulen aufgebaute dynamoelektrische Maschine bekannt, deren gleichartigen Motormodule wellenendseitig gekoppelten sind. Hierbei handelt es sich um bürstenbehaftete Motormodule, die sowohl eingangsseitig als auch ausgangsseitig, also A-seitig und B-seitig ein Wellenlager in Form jeweils eines Kugellager aufweisen.

Der Erfindung liegt die Aufgabe zugrunde eine Motorbaugruppe anzugeben, die hinsichtlich ihrer Baugröße verbessert ist. Der Erfindung liegt weiterhin die Aufgabe zugrunde einen mit einer derartigen Motorbaugruppe ausgestatteten Verstellantrieb anzugeben.

Hinsichtlich der Motorbaugruppe wird die Aufgabe erfindungsgemäß mit den Merkmalen des Anspruchs 1 und hinsichtlich des Verstellantriebs mit den Merkmalen des Anspruchs 10 erfindungsgemäß gelöst. Vorteilhafte Ausgestaltungen und Weiterbildungen sind Gegenstand der jeweiligen Unteransprüche.

Die erfindungsgemäße Motorbaugruppe weist eine Anzahl von entlang einer gemeinsamen Drehachse angereihten Elektromotoren auf. Die Elektromotoren umfassen jeweils einen Stator und einen auf einer Motorwelle angeordneten Rotor. Im Reihenverbund der angereihten Elektromotoren sind die einzelnen Motorwellen fluchtend (entlang derselben Drehachse) zueinander angeordnet, wobei die gemeinsame Drehachse durch eine Kopplung der somit stirnseitig aneinander angereihten Motorwellen gebildet ist. Die Kopplung der Motorwellen miteinander ist insbesondere nach Art einer Drehmomentüberlagerung ausgestaltet. Dies bedeutet, dass die einzelnen Drehmomente der Elektromotoren auf die gemeinsame Drehachse ausgeübt beziehungsweise aufsummiert werden.

Durch die Anreihung von Elektromotoren mit vergleichsweise geringer Achshöhe ist es somit möglich, an dem abtriebsseitigen Wellenende des stirnseitig äußersten Elektromotors eine aufsummierte (Motor-)Leistung abzugreifen. Mit anderen Worten wird durch die Motorbaugruppe eine Motorleistung bereitgestellt, die im Wesentlichen der Motorleistung eines einzelnen Elektromotors größerer Achshöhe entspricht. Im Hinblick auf diesen einzelnen Elektromotor weist die Motorbaugruppe somit einen verringerten Platzbedarf hinsichtlich der Achshöhe auf, wodurch zusätzliche Freiheiten in der Gestaltung eines vorhandenen Bauraums erzeugt werden. Des Weiteren sind in der Anwendung von achsparallelen Motoren kleine Achsabstände möglich.

Die Abmessungen der Motorbaugruppe sind hierbei im Wesentlichen durch die aufsummierte Baulänge der Elektromotoren sowie aufgrund der gemeinsamen, vergleichsweise geringen Achshöhe gegeben. Mit anderen Worten wird durch die Anreihung in Axialrichtung im Vergleich zu einem einzelnen Elektromotor entsprechender Leistung ein Bauraum in Radialrichtung eingespart. Dadurch eignet sich die Motorbaugruppe insbesondere für einen Einsatz für Bauräume mit begrenzten radialen und im Wesentlichen freien axialen Volumen, beispielsweise in Schächten mit geringem Wandabstand oder in Rohren beziehungsweise rohrförmigen Bauteilen.

Die im Wesentlichen baugleichen Elektromotoren sind in Reihe zueinander angeordnet und montiert, wobei wellenendseitige Wellenzapfen benachbarter Elektromotoren koaxial zueinander ausgerichtet und miteinander gekoppelt sind. Dies bedeutet, dass die Motorbaugruppe eine im Wesentlichen modulare Bauweise aufweist, sodass ein hoher Vorfertigungsgrad und dadurch vergleichsweise geringe Herstellungs- und Montagekosten ermöglicht sind. Insbesondere ist es möglich, eine Motorbaugruppe durch eine kaskadierenden Aneinanderreihung einer entsprechenden Anzahl von Elektromotoren besonders einfach an eine gewünschte Motorleistung anzupassen.

Die Motorwellen benachbarter Elektromotoren sind mittels eines wellenfesten Verbindungsstücks vorzugsweise drehfest gekoppelt. Das beispielsweise manschetten- oder hülsenartige Verbindungsstück ist hierbei derart ausgestaltet, dass es die Wellenenden der jeweiligen Motorwellen formschlüssig oder kraftschlüssig fügt, z. B. mittels einer Nut-Feder-Verbindung. Dadurch ist eine konstruktiv einfache Kopplung der Motorwellen ermöglicht.

In einer vorteilhaften Ausgestaltung weist das Verbindungsstück eine Kerbverzahnung auf. Die Motorwellen weisen hierbei zweckmäßigerweise wellenendseitig eine gegengleichen Steckverzahnung auf, sodass das Verbindungsstück zur Herstellung einer Kopplung nach Art einer Welle-Nabe-Verbindung aufsetzbar ist. Dadurch ist eine besonders betriebssichere Kopplung von benachbarten Motorwellen ermöglicht. Bevorzugterweise ermöglicht das Verbindungsstück hierbei einen Längenausgleich der Motorwellen relativ zueinander, sodass temperaturbedingte Längenänderungen der Motorwellen innerhalb der Motorbaugruppe ausgleichbar sind.

Die Elektromotoren jeweils ein bevorzugt hohlzylindrisches Motorgehäuse auf. Das Motorgehäuse nimmt im Montagezustand den zugeordneten Stator und den jeweiligen wellenfesten Rotor auf. Die Elektromotoren umfassen des Weiteren ein A-seitiges Lagerschild sowie ein B-seitiges Flanschschild, welche Schilde das Motorgehäuse stirnseitig verschließen. Das Lagerschild ist zweckmäßigerweise als ein Festlager mit einem Wälzlager, beispielsweise mit einem Kugellager, zur rotationsbeweglichen Lagerung der Motorwelle ausgeführt. Das Flanschschild ist lagerfrei ausgestaltet

Das lagerfreie Flanschschild kann, beispielsweise vier, Bohrungen aufweisen, die fluchtend zu den Bohrungen des Flansches des oder eines A-Lagerschildes angeordnet sind. Durch die Bohrungen sind die Motorgehäuse benachbarter beziehungsweise angereihter Elektromotoren miteinander mechanisch fest verschraubbar, sodass eine mechanisch stabile Motorbaugruppe gebildet ist. Bei der Montage wird insbesondere das Flanschschild mit dem A-seitigen Lagerschild des benachbarten Elektromotors gekoppelt.

Mit anderen Worten weisen die Elektromotoren lediglich eine (A-seitige) Lagerstelle für die jeweilige Motorwelle auf, wobei im Montagezustand der Motorbaugruppe aufgrund des sich an das jeweilige Flanschschild anschließende A-Lagerschild des benachbarten Elektromotors und aufgrund der Wellenkopplung durch das Verbindungsstück eine betriebssichere Lagerung der Motorwellen sichergestellt ist. Durch das fehlende B-Lager wird die Kopplung zweier Motorwellen gewährleistet, so dass eine Verspannung und somit eine Verwendung einer Ausgleichskupplung nicht notwendig ist.

In einer vorteilhaften Weiterbildung ist auf der B-Seite der Elektromotoren eine Zentrierscheibe mit einer von der jeweiligen Motorwelle durchsetzten Zentralöffnung angeordnet. Die Zentrierscheibe mit einer Zentralöffnung mit einem kleinen Luftspalt zur Motorwelle bzw. zur Verbindungshülse ermöglicht eine zentrierte, gehäuseinterne Ausrichtung der jeweiligen Motorwelle. Mit anderen Worten ermöglicht die Zentrierscheibe bei einer Montage der Motorbaugruppe eine selbsttätige koaxiale Ausrichtung der Motorwellen während des Aneinanderreihens. Es wird somit auch sichergestellt, dass bei nicht montierten Motoren auch bei lediglich einer Lagerstelle des Elektromotors keine Berührung zwischen Rotor und Stator auftritt. Bei Synchronmotoren sind die einzelnen Elektromotoren beim Zusammenbau in deren Pollage zu synchronisieren.

In einer zweckmäßigen Ausbildung weist der Flansch des jeweiligen Flanschschildes mindestens eine Abstützaufnahme der Elektromotoren bzw. der gesamten Motorbaugruppe auf. Mittels dieser Ausgestaltung des Flansches kann die Motorbaugruppe in einfacher sowie zuverlässiger Art und Weise an geeigneten Stützstrukturen, beispielsweise vermittels entsprechender Schraubverbindungen, befestigt werden.

In einer vorteilhaften Ausführung weist die Motorbaugruppe an seiner B-seitigen Stirnseite einen Servomotor auf, der A-seitig mit einem der angereihten Elektromotoren gekoppelt ist. Der Servomotor weist B-seitig ein Lagerschild mit einem daran angeordneten Geber auf. Mit anderen Worten flankiert der Servomotor stirnseitig den Reihen- oder Paketverbund der angereihten Elektromotoren. Durch die Kopplung an einen Servomotor wird eine elektronische Lage-, Geschwindigkeits- oder Momentregelung der Motorbaugruppe ermöglicht, wodurch die Funktionalität und Flexibilität erhöht wird.

In einer bevorzugten Weiterbildung sind die Elektromotoren, und vorzugsweise auch der Servomotor, an einem gemeinsamen Umrichter, insbesondere in einer Parallelschaltung, angeschlossen. In einer geeigneten Weiterbildungsform ist der Umrichter hierzu insbesondere als ein Servoumrichter ausgeführt, der mit dem Servomotor eine abgestimmte, funktionelle Einheit bildet.

In einer bevorzugten Anwendungsform ist die Motorbaugruppe in einem Verstellantrieb verbaut. Bei dem Verstellantrieb handelt es sich beispielsweise um einen elektromotorischen Antrieb für ein Regalbediengerät eines Lagersystems, beispielsweise eines Hochregallagers. Dadurch ist ein dynamischer Verstellantrieb insbesondere für Beschleunigungs- und/oder Verzögerungsaufgaben bereitgestellt, beispielsweise für eine Positionierung. Durch die längliche Motorbaugruppe ist weiterhin ein besonders schlanker beziehungsweise achshöhenreduzierter Verstellantrieb bereitgestellt, sodass im Rahmen eines Regalbediengeräts ein besonders großes Aufnahmevolumen (Bauvolumen) für Lagerbehälter ermöglicht ist.

Des Weiteren ist durch die Anreihung der Elektromotoren ein besonders flexibler Verstellantrieb realisiert, der an die jeweilige Lastanforderung angepasst werden kann. Bei einer niedrigen Last (leichter Lagerbehälter) können beispielsweise einer oder mehrere Elektromotoren abgeschaltet werden, sodass das aufsummierte Drehmoment auf der Abtriebsseite der Motorbaugruppe verringert wird. Bei einer höheren Last (schwerer Lagerbehälter) können entsprechend Elektromotoren hinzugeschalten werden, sodass deren Drehmoment auf die gemeinsame Drehachse aufsummiert wird. Dadurch ist ein besonders energieeffizienter Betrieb des Verstellantriebs ermöglicht.

Nachfolgend ist ein Ausführungsbeispiel der Erfindung anhand einer Zeichnung näher erläutert. Darin zeigen:
- Fig. 1: in schematischer Darstellung eine Motorbaugruppe mit einem Servomotor und vier daran angereihten Elektromotoren, sowie mit einem Umrichter,
- Fig. 2: in einem Längsschnitt die Motorbaugruppe, und
- Fig. 3: in Draufsicht ein Flanschschild eines Elektromotors.

Einander entsprechende Teile und Größen sind in allen Figuren mit den gleichen Bezugszeichen versehen.

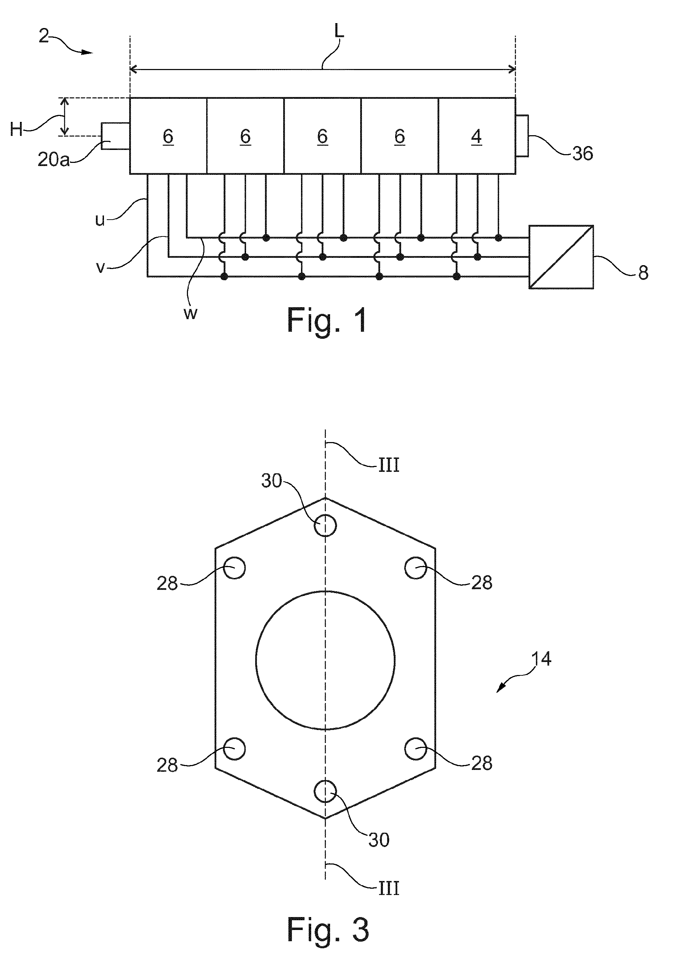

In Fig. 1 ist schematisch vereinfacht eine Motorbaugruppe 2 eines nicht näher gezeigten Verstellantriebs eines Regalbediengeräts dargestellt. Die längliche Motorbaugruppe 2 umfasst einen stirnseitig angeordneten Servomotor 4 sowie vier hieran angereihte Elektromotoren 6. Die Motoren 4 und 6 der Motorbaugruppe 2 sind elektrisch und mechanisch miteinander gekoppelt. Die vorzugsweise als bürstenlose Elektromotoren ausgeführten Motoren 4 und 6 werden im Betrieb mit drei Motorphasen u, v, w bestromt, und sind zu diesem Zwecke an einen gemeinsamen Umrichter 8 in einer Parallelschaltung angeschlossen.

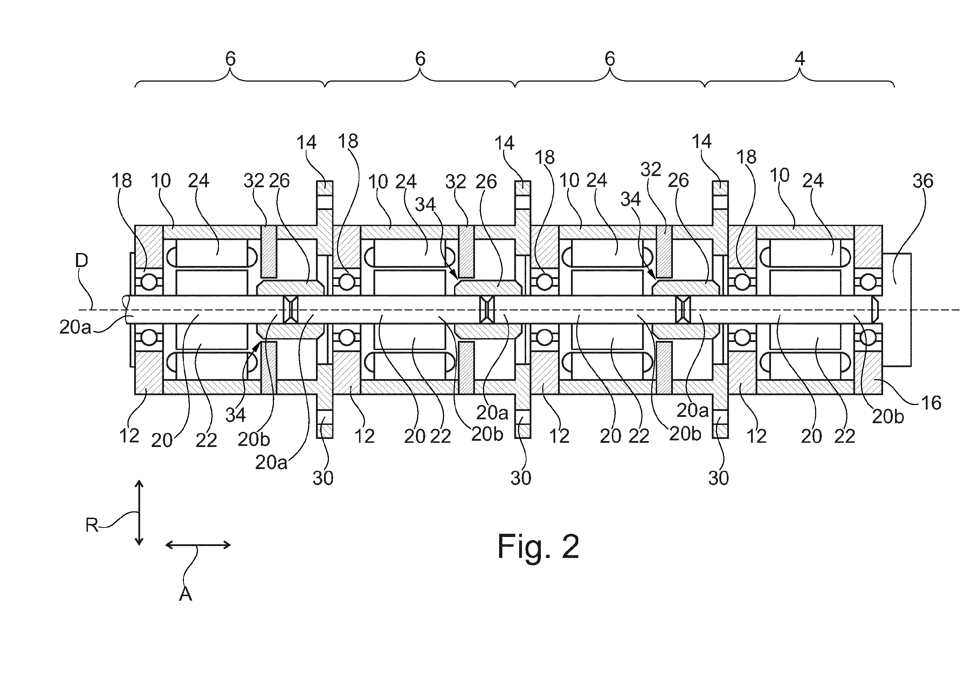

In Fig. 2 ist die Motorbaugruppe 2 mit einer Axialrichtung A und einer Radialrichtung R in einer Schnittdarstellung dargestellt. Der Schnitt verläuft entlang einer gemeinsamen Drehachse D der Motoren 4 und 6, die parallel zu der axialen Richtung A orientiert ist. Die Radialrichtung R ist hierbei insbesondere entlang einer Achshöhe H der Motorbaugruppe 2 orientiert, wobei die Axialrichtung A insbesondere entlang der Baulänge L der Motorbaugruppe 2 verläuft.

Die Motoren 4 und 6 weisen jeweils ein hohlzylinderartiges Motorgehäuse 10 beispielsweise aus einem Aluminiummaterial auf, das beispielsweise einen etwa rechteckigen Querschnitt aufweist. Das Motorgehäuse 10 eines Elektromotors 6 wird stirnseitig von einem A-seitigen Lagerschild 12 (A-Lagerschild) und einem B-seitigen Flanschschild 14 verschlossen, wobei der Servomotor 4 anstatt eines Flanschschildes 14 ein B-seitiges Lagerschild 16 (B-Lagerschild) aufweist. Mit anderen Worten sind die Elektromotoren 6 und der Servomotor 4 im Wesentlichen baugleich aufgebaut, wobei bei den Elektromotoren 6 das B-Lagerschild 16 durch das lagerlose Flanschschild 14 ersetzt ist.

An den Lagerschilden 12 und 16 sind Lager 18 angebracht, beispielsweise Kugellager. Innerhalb der Lager 18 ist eine zylinderförmige Motorwelle 20 wellenendseitig gelagert. Die Motorwelle 20 ist konzentrisch mit der Drehachse D und den Lagern 18 angeordnet. Die Motorwelle 20 eines Motors 4 und 6 ist stirnseitig mit der Motorwelle 20 des jeweils angereihten Motors 6 mechanisch gekoppelt.

An den Motorwellen 20 ist jeweils ein schematisch dargestellter Rotor 22 konzentrisch angebracht. Der Rotor 22 ist innerhalb eines zugeordneten, gehäusefesten Stators 24 drehbar gelagert. Im Betrieb wird eine nicht näher dargestellte Drehfeldwicklung des Stators mit den Motorphasen u, v, w bestromt, und somit ein zeitlich veränderbares Magnetfeld erzeugt, das ein Drehmoment auf die Motorwelle (Rotorwelle) 20 ausübt.

Ein A-seitiger Wellenzapfen 20a der Motorwellen 20 steht dem A-seitigen Lagerschild 12 zentral über. Der Wellenzapfen 20a dient im Reihenverbund der Motoren 4 und 6 insbesondere der Ankopplung an das jeweils anschließende Wellenende 20b der benachbarten Motorwelle 20. Im Montagezustand der Motorbaugruppe 2 greift der Wellenzapfen 20a beziehungsweise das abtriebsseitige Wellenende 20a zumindest teilweise in das Motorgehäuse 10 beziehungsweise das Flanschschild 14 des benachbarten Motors 6 ein.

Zur Kopplung der Motorwellen 20 weisen die jeweiligen Wellenenden 20a, 20b beispielsweise jeweils eine umfangseitig angeformte Steckverzahnung auf. Wie in Fig. 2 ersichtlich sind die Motorwellen 20 im Montagezustand wellenendseitig jeweils mit einem hülsenartigen Verbindungsstück 26 miteinander gekoppelt. Das etwa hohlzylinderartige Verbindungsstück 26 weist hierzu beispielsweise eine innenseitge Kerbverzahnung auf, die zweckmäßigerweise gegengleich zu den Steckverzahnungen der Wellenenden 20a, 20b ausgeführt ist.

Das Verbindungsstück 26 ist im Montagezustand einerseits formschlüssig mit dem Wellenende 20a eines ersten Motors 4 und 6 und andererseits formschlüssig mit dem Wellenende 20b eines daran angereihten Motors 6 nach Art einer Welle-Nabe-Verbindung steckverbunden. Mit anderen Worten sind die Motorwellen 20 durch das Verbindungsstück 26 drehfest miteinander gekoppelt. Das bedeutet, dass die Motorwellen 20 der einzelnen Motoren 4 und 6 effektiv zu einer gemeinsamen Motorwelle der Motorbaugruppe 2 verbunden sind. Dadurch erfolgt im Betrieb eine Drehmomentüberlagerung der Motoren 4 und 6, sodass die einzelnen Drehmomente der Motoren 4 und 6 auf die gemeinsame Drehachse D aufsummiert werden. An dem stirnseitig äußersten Wellenzapfen 20a der Motorbaugruppe 2 ist somit eine vergleichsweise große Motorleistung abgreifbar.

Die Flanschschilder 14 der Elektromotoren 6 sind lagerfrei. Der in Fig. 3 näher dargestellte Flansch 14 ist sechseckig und weist vier zueinander rechteckig angeordnete Bohrungen 28 auf, die im Montagezustand fluchtend zu den Bohrungen des Flansches des A-Lagerschilds 12 angeordnet sind. Im Montagezustand sind durch die Bohrungen 28 nicht näher dargestellte Schraubenelemente geführt, die zum Zwecke einer stabilen mechanischen Verbindung die Motorgehäuse 10 mit entsprechenden Bohrungen der Lagerschilder 12 und 16 verschrauben.

In den zwei verbleibenden, gegenüberliegenden Eckbereichen des Flansches 14 ist jeweils eine Abstützaufnahme 30 des jeweiligen Elektromotors 6 eingebracht. Die Abstützaufnahmen 30 liegen auf einer gemeinsamen Verbindungslinie III-III, die im Wesentlichen die Schnittlinie der Fig. 2 bildet.

Zwischen dem Flanschschild 14 und dem Motorgehäuse 10 ist eine kreisringartige Zentrierscheibe 32 angeordnet, die eine mittige Zentralöffnung 34 aufweist, in der das jeweils zugeordnete Verbindungsstück 26 zumindest teilweise einliegt.

Die Elektromotoren 6 weisen mit dem A-Lagerschild 12 lediglich ein Lager 18 für die zugeordnete Motorwelle 20 auf. Durch die Zentrierscheibe 32 mit einem kleinen Luftspalt ist die Motorwelle 20 zentriert im Motorgehäuse 10 gehalten, sodass der Rotor 22 vor der Montage nicht mit dem Stator 24 in Berührung kommt. Durch das im Montagezustand an das jeweilige Flanschschild 14 anschließende A-Lagerschild 12 des benachbarten Motors 4 und 6 ist aufgrund der drehfesten Kopplung des Verbindungsstücks 26 im Wesentlichen eine jeweilige zweite Lagerstelle für die Motorwellen 20 gebildet.

Am Lagerschild 16 des Servomotors 4 ist beispielsweise ein Resolver als ein Geber 36 für eine nicht näher dargestellte Steuerung angeordnet. Der Geber 36 dient insbesondere einer elektromagnetischen Messumformung zur Wandlung einer Winkellage der zugeordneten Motorwelle 20 beziehungsweise deren Wellenende 20b in eine elektrische Größe für die Steuerung. Dadurch ist eine elektronische Lage-, Geschwindigkeits- oder Momentregelung der Motorbaugruppe 2 seitens der Steuerung möglich. Die Steuerung ist zweckmäßigerweise an den Umrichter 8 signaltechnisch angeschlossen, wobei der Umrichter 8 insbesondere als ein Servoumrichter ausgeführt ist.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen.

### Bezugszeichenliste

- 2: Motorbaugruppe
- 4: Servomotor
- 6: Elektromotor
- 8: Umrichter
- 10: Motorgehäuse
- 12: Lagerschild/A-Lagerschild
- 14: Flanschschild/Flansch
- 16: Lagerschild/B-Lagerschild
- 18: Lager
- 20: Motorwelle
- 20a: Wellenzapfen/Wellenende A-seitig
- 20b: Wellenende B-seitig
- 22: Rotor
- 24: Stator
- 26: Verbindungsstück
- 28: Bohrung
- 30: Abstützaufnahme
- 32: Zentrierscheibe
- 34: Zentralöffnung
- 36: Geber

- u,v,w: Motorphase
- A: Axialrichtung
- R: Radialrichtung
- H: Achshöhe
- L: Baulänge
- D: Drehachse

## Patentansprüche

1. Motorbaugruppe (2) mit einer Anzahl von entlang einer gemeinsamen Drehachse (D) angereihten Elektromotoren (6) mit jeweils einem Stator (24) und einem Rotor (22) sowie einer diesen tragenden Motorwelle (20), die stirnseitig mit der Motorwelle (20) des angereihten Elektromotors (6) gekoppelt ist,
- wobei die Motorwellen (20) benachbarter Elektromotoren (6) mittels eines wellenfesten Verbindungsstücks (26) gekoppelt sind, das mit den Wellenenden (20a, 20b) der jeweiligen Motorwelle (20) formschlüssig oder kraftschlüssig gefügt ist, und
- wobei die Elektromotoren (6) jeweils ein den Stator (24) und den Rotor (22) aufnehmendes Motorgehäuse (10) sowie A-seitig ein Lagerschild (12) und B-seitig ein lagerfreies Flanschschild (14) aufweisen.

2. Motorbaugruppe (2) nach Anspruch 1,
**dadurch gekennzeichnet,**
**dass** das Verbindungsstück (26) eine Kerbverzahnung oder Nut und die jeweilige Motorwellen (20) wellenendseitig eine gegengleiche Steckverzahnung oder Nut mit einer Feder aufweist.

3. Motorbaugruppe (2) nach Anspruch 1 oder 2,
**dadurch gekennzeichnet,**
**dass** auf der B-Seite der Elektromotoren (6) eine Zentrierscheibe (32) mit einer von der jeweiligen Motorwelle (20) durchsetzten Zentralöffnung (34) angeordnet ist.

4. Motorbaugruppe (2) nach Anspruch 3,
**dadurch gekennzeichnet,**
**dass** die Motorwelle (20) oder das Verbindungsstück (26) abschnittsweise in der Zentralöffnung (34) der Zentrierscheibe (32) einliegt.

5. Motorbaugruppe (2) nach einem der Ansprüche 1 bis 4,
**dadurch gekennzeichnet,**
**dass** der Flansch des jeweiligen Flanschschildes (14) mindestens eine Abstützaufnahme (30) aufweist.

6. Motorbaugruppe (2) nach einem der Ansprüche 1 bis 5, mit einem Servomotor (4), der A-seitig mit einem der angereihten Elektromotoren (6) gekoppelt ist und B-seitig ein Lagerschild (16) mit einem daran angeordneten Geber (36) aufweist.

7. Motorbaugruppe (2) nach einem der Ansprüche 1 bis 6,
**dadurch gekennzeichnet,**
**dass** die Elektromotoren (6) beziehungsweise diese und der Servomotor (4) an einen gemeinsamen Umrichter (8) angeschlossen sind.
